# EUROPÄISCHE PATENTSCHRIFT

(11) **EP 3 525 941 B1**
(45) Veröffentlichungstag und Bekanntmachung des Hinweises auf die Patenterteilung: **23.11.2022**
(21) Anmeldenummer: 18737614.0
(22) Anmeldetag: 05.07.2018
(51) Int. Cl.: B07B 1/38, B07B 1/42, B07B 1/28

(54) **VORRICHTUNG UND VERFAHREN ZUR AUFNAHME VON BEWEGUNGSMUSTERN VON TAUMELSIEBMASCHINEN**
DEVICE AND METHOD FOR CAPTURING MOVEMENT PATTERNS OF TUMBLER SCREENING MACHINES
DISPOSITIF ET PROCÉDÉ DE PRISE DE VUE DE MODÈLES DE MOUVEMENT DE TAMISEURS OSCILLANTS

(30) Priorität: 06.07.2017 DE 102017006388
(43) Veröffentlichungstag der Anmeldung: 21.08.2019
(73) Patentinhaber: Allgaier Werke GmbH, 73066 Uhingen (DE)
(72) Erfinder: TROJOSKY, Mathias, 73230 Kirchheim unter Teck (DE); HARDT, Klaus, 73037 Göppingen (DE)
(74) Vertreter: Bosch Jehle Patentanwaltsgesellschaft mbH
(86) Internationale Anmeldenummer: PCT/EP2018/068310
(87) Internationale Veröffentlichungsnummer: WO 2019/008124

(56) Entgegenhaltungen:
- EP-A1- 1 133 753
- WO-A1-2016/057805
- GB-A- 2 244 823

## Beschreibung

Gegenstand der vorliegenden Erfindung ist eine Vorrichtung sowie ein Verfahren zur Aufnahme von Bewegungsmustern Taumelsiebmaschinen.

Aus dem Stand der Technik sind verschiedene Vorrichtungen und Verfahren zur Aufnahme von Bewegungsmustern von Siebmaschinen oder Taumelsiebmaschinen, bekannt. Derartige Siebmaschinen oder Taumelsiebmaschinen, werden zur Siebung oder Klassierung vielfältiger Schüttgüter aus allen industriellen Branchen sowie auch zur Siebung oder Filterung von Suspensionen eingesetzt.

In Siebmaschinen werden Siebgewebe eingesetzt, die durch unterschiedliche Maschenweiten zu einer Trennung von Gütern in Grobgut und Feingut, bzw. bei einer Siebung von Flüssigkeiten zu einem Zurückhalten von Feststoffpartikeln oberhalb einer bestimmten Größe aus der Suspension heraus führen. Während die Feingüter durch die Maschen der Siebgewebe hindurch fallen oder hindurch passiert und unterhalb des Siebdecks abgezogen werden, laufen die Grobgüter auf dem Siebgewebe zu einem Auslass an der Maschine und werden dort getrennt abgezogen.

Zur Herstellung einer Anzahl von Fraktionen aus einen breiten Gemisch verschiedener Partikelgrößen werden Maschinen mit mehreren übereinander angeordneten Siebgeweben bzw. Siebdecks gebaut, die in der Regel von oben nach unten gemäß der Maschenweite der Siebe und der dadurch erzielbaren Größe der Partikelfraktionen angeordnet sind.

Siebmaschinen unterschiedlicher Bauformen werden durch Vibrationsmotoren oder durch Getriebemotoren mit Exzenterantrieb in einer Ihrer Bauform gemäßen Weise angetrieben und bewegt.

Dadurch wird das in der Regel in der Maschine fest eingespannte Siebgewebe bzw. ein in der Maschine montierter Siebrahmen mit dem aufgespannten Siebgewebe durch einen Vibrationsmotor oder durch einen Unwuchtantrieb entsprechend bewegt und beschleunigt, wodurch sich eine Klassierfunktion ergibt.

Für eine Bewertung und Einstellung der Funktion der Siebmaschine ist die Kenntnis der Maschinenbewegung erforderlich und wichtig. Aus diesem Grunde sind Methoden entwickelt worden, die Maschinenbewegung zu messen und aufzuzeichnen.

Am Beispiel einer Taumelsiebmaschine soll eine bekannte Methode zur Ermittlung der charakteristischen Maschinenbewegung erläutert werden.

Taumelsiebmaschinen vollführen durch einen eingebauten speziellen Mechanismus eine dreidimensionale Bewegung im Raum, eine sogenannte Taumelbewegung. Durch eine Überlagerung einer tangentialen Maschinenneigung und einer radialen Maschinenneigung wird ein auf das Siebgewebe bzw. das Siebdeck aufgegebener Feststoff spiralförmig auf einem besonders langen Weg über das Siebgewebe geführt, was zu einer bekannt guten Trennleistung von Taumelsiebmaschinen sowie schließlich zum Austrag des Grobgutes am äußeren Rand des Siebdecks führt. Die Drehzahl des Antriebs der Siebmaschine liegt im Bereich von z.B. 200 bis 250 Umdrehungen pro Minute, vorzugsweise bei Taumelsiebmaschine bei ca. 230 Umdrehungen pro Minute.

In einer seitlichen Aufsicht auf die Maschinenoberfläche bewegt sich ein auf der Maschine angebrachter Punkt in flächenhafter, zweidimensionaler Projektion in Form einer Ellipse.

Diese Erkenntnis hat zur Entwicklung eines bekannten Verfahrens zur Aufzeichnung einer charakteristischen, eine Maschinenbewegung darstellenden Ellipse geführt. Dabei wird ein in axialer Richtung beweglich angebrachter Schreibstift für wenige Sekunden, z.B. 2 bis 5 Sekunden, über ein am Maschinengehäuse befestigtes Stück Papier, eine sogenannte Kurvenkarte geführt, so dass die Bewegung der Maschine und des Papieres zur Aufzeichnung einer Ellipse durch den beweglich angebrachten Schreibstift führt. Der Stift kann über eine auf eine Fläche aufgelegte Rundfeder, in die der Stift eingespannt ist oder über ein Stativ geführt werden. Zusätzlich wird im ausgeschalteten Zustand der Maschine eine waagerechte Linie auf das Papier, eine sogenannte Kurvenkarte, gezeichnet, die als Referenz zur Ermittlung der Neigung der Ellipse zur Horizontalen dient.

Die so aufgezeichnete Ellipse charakterisiert durch ihre geometrischen Abmessungen (a) der radialen Dicke, (b) der Exzentrizität und (c) der tangentialen Neigung als Stellparameter die aktuelle Einstellung der Maschine. Durch eine Verstellung an der Maschine können die Stellparameter der Maschine verändert und die Bewegung des Feststoffes sowie die Siebleistung der Maschine beeinflusst werden.

Das bekannte Verfahren hat folgende Nachteile:
- Für die Aufnahme der Ellipse zur Ermittlung der Stellparameter wird eine mechanische Vorrichtung zur in axialer Richtung beweglichen Befestigung eines Schreibstiftes benötigt.
- Die Aufzeichnung der Ellipse bedarf genügender Erfahrung und Übung durch einen Bediener und ist bei in der betrieblichen Praxis üblicherweise nicht ausreichend stabiler Schreibstiftlagerung nicht vollständig reproduzierbar.
- Die Stellparameter müssen aus der aufgezeichneten Kurve manuell ausgemessen werden, wozu die Symmetrielinie durch die Ellipse sowie die horizontale Referenzlinie exakt eingezeichnet werden müssen. Erst danach können die radiale Dicke der Ellipse, die Exzentrizität und die tangentiale Neigung der Ellipse vermessen werden. Die Bestimmung der Stellparameter über die beschriebene manuelle Methode ist folglich häufig fehlerbehaftet.
- Die bekannte Methode eignet sich nicht sinnvoll für eine moderne elektronische oder rechentechnische Verarbeitung oder Versendung der Messwerte z.B. vom Aufstellort der Maschine durch den Betreiber zum Hersteller der Maschine zum Zwecke einer Beratung und/oder Service-Dienstleistung z.B. in Form der Beurteilung der Maschinenfunktion oder einer Neueinstellung der Maschine auf neue Produkte.
- Eine automatisierte Einbindung einer regelmäßigen oder ständigen elektronischen Maschinenüberwachung in das elektronische Mess-Leitsystem des Anlagenbetreibers ist mit der herkömmlichen Methode nicht möglich.

Es sind verschiedene Vorrichtungen und Verfahren zur Messung bzw. Aufnahme der Bewegung von Maschinen im Stand der Technik bekannt, wenige davon zur Aufzeichnung der Bewegung Taumelsiebmaschinen.

Aus der Patentschrift EP 1133753 B1 ist ein elektronisches Schreibgerät sowie ein Verfahren zur Aufzeichnung von Linien auf einer Unterlage bekannt. Diese Methode wird in der Konstruktionstechnik verwendet oder auch zur Aufzeichnung von Notizen auf Computer-Tablets, setzt aber den Kontakt des Schreibgerätes mit der Unterlage voraus, so wie sich dies auch bei der oben beschriebenen herkömmlichen Methode zur Ermittlung der Bewegungskurve von Taumelsiebmaschinen als nachteilig erwiesen hat.

Aus der Patentanmeldung DE 19717306 A1 ist eine Vorrichtung und ein Verfahren bekannt, welches im Wesentlichen in der Verwendung eines sogenannten Memostiftes in CAD-Anwendungen besteht. Diese Methode setzt ebenfalls den direkten Kontakt des Stiftes mit einer Unterlage voraus, wonach die Bewegung des Stiftes in den Computer übernommen werden kann.

Aus dem Gebrauchsmuster DE 202013001383 U1 ist eine Methode der Verwendung von Beschleunigungssensoren bekannt, welche am bewegten Objekt, insbesondere einem menschlichen Unterkiefer angeordnet sind. Die sich aus einer Bewegung des Objektes ergebenden Beschleunigungswerte in den verschiedenen Raumrichtungen sowie die Zeiten der Bewegungen werden mittels aufwändiger mathematischer Methoden in Wegstrecken und Raumrichtungen umgerechnet. Eigene Untersuchungen zur Anwendung einer ähnlichen Methode für die Ermittlung der Bewegungskurve von Siebmaschinen haben ergeben, dass die Methode mit aufwändigen messtechnischen Einrichtungen und mathematischen Auswertemethoden verbunden ist und die erhaltenen Ergebnisse ohne regelmäßige Kalibrierung der Auswertesoftware insbesondere bei sich ändernden Maschinenparametern nur bedingt reproduzierbar sind.

Aus der Patentanmeldung EP 2696251 A2 ist eine mit der Lehre des oben genannten Gebrauchsmusters verwandte Methode zur Überwachung von rotierenden Maschinen, insbesondere von Windenergieanlagen bekannt, welche zu diesem Zweck mit einer Mehrzahl von Sensoren zum Erfassen von physikalischen Parametern versehen ist. Bei dieser Methode besteht ebenfalls das Problem, dass die Maschine zunächst aufwändig mit Sensoren zu bestücken ist und die erhaltenen Sensordaten ausgewertet werden müssen. Die Methode eignet sich insbesondere zur Überwachung von Schwingungen von Maschinen und der Erkennung von gegenüber dem Ausgangszustand abnormen Zuständen, z.B. durch Verschleiß.

Aus der Patentschrift EP 1981403 B1 ist eine für die Medizintechnik bzw. Sportwissenschaft entwickelte Methode bekannt, welche Methoden der elektronischen Bilderkennung zur Aufzeichnung der Bewegung des menschlichen Körpers verwendet. Durch die Verwendung mehrerer Kameras und die Beobachtung einer Vielzahl von am menschlichen Körper angebrachten Bildpunkten wird die Auswertung der Bewegung eines menschlichen Körpers in dreidimensionalen Raum ermöglicht.

Aus der Patentanmeldung DE 10017162 A1 ist eine Vorrichtung und ein Verfahren der Aufzeichnung sich wiederholender Bewegungen durch stroboskopische Aufnahmen bekannt, wobei eine Vielzahl von Bildern aufgenommen und zu einer Bewegungsinformation zusammengeführt wird. Diese Methode setzt die Verwendung eines stroboskopischen Aufzeichnungsgerätes voraus sowie eine aufwändige Bildverarbeitung der einzelnen Aufnahmen. Die Ermittlung von Parametern der Bewegung aus den aufgezeichneten Bildern wird nicht beschrieben.

Aus der Patentanmeldung EP 0263062 A1 ist ein Verfahren zur Aufzeichnung der Bewegung von Objekten durch die Verwendung einer Photoelement-Projektionsfläche und die Umwandlung eines sich durch bewegte Objekte, insbesondere durch Versuchstiere, verursachten Schattens in ein photoelektrisches Signal bekannt. Diese Methode ist aufwändig, da eine Photoelement-Projektionsfläche benötigt wird, dem Anwender zur Verfügung gestellt werden muss und im Falle der Anwendung bei sich bewegenden Maschinen auf der Maschine angebracht werden muss. Außerdem setzt diese Methode eine elektrische Verbindung der Projektionsfläche mit einem elektronischen Auswertesystem voraus.

Die Patentanmeldung GB 2 244 823 A betrifft eine Siebmaschine mit einer dreidimensionalen Siebbewegung, aufweisend einen Träger für den wenigstens einen Siebboden, wobei der gegenüber dem Gehäuse beweglich angeordnete und von einem Elektromagneten als Antrieb beaufschlagte Siebträger über Federn gegen das Gehäuse abgestützt ist. Die Siebmaschine sieht ferner vor, dass zwischen dem Gehäuse und dem Siebträger ein induktiver Weggeber zur Ermittlung der Schwingungshöhe des Siebträgers angeordnet und mit einer Steuereinheit verbunden ist, die zur Darstellung der ermittelten Schwingungshöhe in einer optischen Anzeige und/oder zum Umsetzen einer vorgegebenen Schwingungshöhe in die erforderliche Energiezufuhr für den Elektromagneten eingerichtet ist.

Die Patentanmeldung WO 2016/057805 A1 betrifft einen kreisförmigen Separator, bei dem mechanisch induzierte Vibrationen verwendet werden. Die Vibrationen werden durch mindestens einen mit dem Gehäuse des Abscheiders gekoppelten Kreiskraftgenerator (CFG) mechanisch auf den Abscheider übertragen. Die Vorrichtung umfasst zudem mindestens einen Sensor, der an der Vorrichtung angeordnet ist, um die Betriebsfunktion zu messen. Die Betriebsfunktion ist mit dem Vibrationsprofil assoziiert.

Der Erfindung liegt somit die Aufgabe zugrunde, eine Vorrichtung und ein Verfahren bereitzustellen, mit dessen Hilfe die Nachteile des Standes der Technik, insbesondere der Aufnahme von Bewegungskurven von Taumelsiebmaschinen, überwunden werden. Insbesondere soll ein besonders einfaches und ebenso preiswertes Verfahren vorgestellt werden, welches mit praktisch jedem Anwender heute zur Verfügungsstehenden Mitteln ausgeführt werden kann.

Diese Aufgabe wird durch das erfindungsgemäße Verfahren mit den Merkmalen gemäß Anspruch 1 sowie durch die Vorrichtung mit den Merkmalen gemäß Anspruch 10 gelöst.

Das erfindungsgemäße Verfahren zur Aufnahme von Bewegungsmustern von Taumelsiebmaschinen, umfasst die Schritte:
1. Anbringen einer optischen Markierung an der Taumelsiebmaschine;
2. Aufnahme der optischen Markierung während des Betriebs der Taumelsiebmaschine und Erstellen von Bilddaten für eine Bewegungskurve;
3. Auswertung der aufgenommenen Bilddaten.

Vorteilhafterweise wird die optische Markierung in einem Bereich angebracht, in dem die Bewegung der Taumelsiebmaschine ermittelt werden soll. Der Bereich kann insbesondere an der Seite der Taumelsiebmaschine sein. Der Bereich kann insbesondere am bewegten Gehäuse der Taumelsiebmaschine sein. Ein Vorteil des Verfahrens ist, dass die Aufnahme der Bewegungskurven vereinfacht und automatisiert wird, die Ermittlung von Kurvenparametern verbessert wird und eine rechentechnische Verarbeitung ermöglicht wird.

Vorteilhafterweise ist die optische Markierung ein passiver Messpunkt, welcher auf das Gehäuse der Taumelsiebmaschine aufgebracht wird. Der Messpunkt kann insbesondere aufgeklebt oder auflackiert werden. Der Messpunkt kann bevorzugt einen Durchmesser von 1 bis 20 mm, besonders bevorzugt von 2 bis 6 mm aufweisen. Der Messpunkt kann bevorzugt aus einem hellen, insbesondere weißen Material ausgeführt sein. Der Messpunkt kann insbesondere aus Papier oder Klebefolie ausgeführt sein. Der Messpunkt kann besonders bevorzugt in einer Leuchtfarbe oder Signalfarbe ausgeführt sein. Ein Vorteil ist, dass das Verfahren an einer eingerichteten Taumelsiebmaschine ohne Eingriffe oder Umbauten angewendet werden kann.

Vorteilhafterweise ist die optische Markierung eine aktive Lichtquelle, welche auf dem Gehäuse der Taumelsiebmaschine angeordnet wird. Die optische Markierung kann insbesondere eine punktförmige aktive Lichtquelle, insbesondere eine Leuchtdiode sein. Die aktive Lichtquelle oder Leuchtdiode kann insbesondere mit einer Knopfzelle zur Stromversorgung, einem Druckschalter oder Kippschalter zum Ein- und Ausschalten und einem Miniaturgehäuse zur Aufnahme der genannten Komponenten ausgestattet sein. Die aktive Lichtquelle, die genannten Komponenten und das Miniaturgehäuse können insbesondere mit einer Magnethalterung, einem Klettverschluss, einer Verschraubung, Verklebung, Vernietung oder Punktschweißung am Gehäuse der Taumelsiebmaschine angebracht werden.

Vorteilhafterweise erfolgt die Aufnahme der Bewegung der optischen Markierung während des Betriebs der Taumelsiebmaschine mit einem elektronischen Bildaufzeichnungsgerät. Das elektronische Bildaufzeichnungsgerät kann insbesondere eine Digitalkamera, ein mobiles Kommunikationsendgerät oder ein Smartphone mit integrierter Digitalkamera sein. Ein Vorteil ist, dass der Betreiber ein vorhandenes Smartphone oder eine vorhandene Digitalkamera für die Aufzeichnung des Bewegungsmusters der Taumelsiebmaschine verwenden kann.

Vorteilhafterweise erfolgt die Aufnahme der Bewegung der optischen Markierung während des Betriebs der Taumelsiebmaschine wenigstens über einen Zeitraum einer Schwingungsperiode der Taumelsiebmaschine. Die Aufnahme der Bewegung kann insbesondere mittels einer langzeitbelichteten Einzelaufnahme, einer mehrfachbelichteten Aufnahmeserie, einer langzeitbelichteten stroboskopischen Einzelaufnahme oder einer Videoaufnahme erfolgen.

Vorteilhafterweise werden Abmessungen und Orientierung der aufgenommenen Bewegungsmuster durch Vergleich mit einem Referenzmittel bestimmt. Das Referenzmittel kann insbesondere ein optisches Referenzgitter oder eine Wasserwaage sein. Die Wasserwage kann eine in dem Smartphone integrierte Wasserwaage sein. Die Abmessungen und die Orientierung der aufgenommenen Bewegungsmuster können auch durch Vergleich mit bekannten Abmessungen der optischen Markierung bestimmt werden.

Vorteilhafterweise werden die aufgenommenen Bewegungsmuster durch eine interne oder externe Recheneinheit ausgewertet und/oder mittels einer Datenübertragungseinheit an eine Diagnoseeinrichtung zur Auswertung übertragen. Vorteilhafterweise werden insbesondere Exzentrizität, radiale Dicke und tangentiale Neigung der aufgenommenen Bewegungsmuster bestimmt und daraus insbesondere Diagnosedaten und/oder Stellparameter der Taumelsiebmaschine abgeleitet. Ein Vorteil der internen Berechnung ist, dass die Auswertung der Bewegungsmuster und die Berechnung der Stellparameter auch auf dem zur Aufnahme der Bewegungsmuster verwendeten Smartphone erfolgen kann. Ein Vorteil der externen Berechnung ist, dass die benötigten Ressourcen durch den Maschinenhersteller bereitgestellt werden können und die notwendige Software für die Auswertung der Bewegungsmuster nicht vom Betriebssystem des verwendeten Smartphones abhängig ist.

Vorteilhafterweise werden aus den Diagnosedaten optimale Stellparameter der Taumelsiebmaschine errechnet und an eine Anzeigeeinheit übertragen. Die Anzeigeeinheit kann bevorzugt eine Anzeigeeinheit des Smartphones sein. Die optimalen Stellparameter der Taumelsiebmaschine können numerisch oder graphisch dargestellt werden, so dass die Parameter manuell auf die Taumelsiebmaschine übertragbar und an der Taumelsiebmaschine einstellbar sind. Die optimalen Stellparameter können auch mittels einer Steuervorrichtung unmittelbar zur Steuerung der Taumelsiebmaschine eingesetzt werden, so dass die manuelle Übertragung und Einstellung entfallen kann.

Die erfindungsgemäße Vorrichtung besteht aus einer Taumelsiebmaschine mit einer optischen Markierung in einem Bereich, in dem die Bewegung der Taumelsiebmaschine ermittelt werden soll. Weiterhin besteht die erfindungsgemäße Vorrichtung aus einer Digitalkamera oder einem Smartphone mit integrierter Digitalkamera, mit welcher bzw. welchem Bewegungsmuster der Taumelsiebmaschine unter Berücksichtigung der optischen Markierung aufnehmbar sind, und eine Auswertungsvorrichtung, aufweisend eine Recheneinheit, mit welcher aus den aufgenommenen Bewegungsmustern Bilddaten für eine Bewegungskurve erstellbar und auswertbar sind.

Vorteilhafterweise sind mit der Recheneinheit der Auswertungsvorrichtung Diagnosedaten und/oder Stellparameter der Taumelsiebmaschine berechenbar, und die Vorrichtung weist weiter auf eine Datenübertragungseinheit, mit welcher Bewegungsmuster und/oder Bilddaten an eine interne oder externe Recheneinheit übertragbar sind und Diagnosedaten und/oder Stellparameter von der internen oder externen Recheneinheit an den Ort der Maschine zurück übertragbar sind und eine Anzeigeeinheit, insbesondere eine Anzeigeeinheit eines Smartphones, mit welcher die zurück übertragenen Daten darstellbar sind.

Vorteilhafterweise weist die Vorrichtung weiterhin ein Referenzmittel auf. Das Referenzmittel kann insbesondere ein optisches Referenzgitter und/oder eine Wasserwaage sein. Das optische Referenzgitter kann transparent ausgeführt sein und zwischen der optischen Markierung und der Aufnahmevorrichtung oder neben der optischen Markierung angeordnet sein. Die Wasserwaage kann bevorzugt eine in dem Smartphone integrierte Wasserwaage sein. Vorteilhafterweise sind Abmessungen und Orientierung der aufgenommenen Bewegungsmuster durch Vergleich mit dem Referenzmittel bestimmbar.

Vorteilhafterweise ist das elektronische Bildaufzeichnungsgerät eine Digitalkamera, welche für die Erstellung einer langzeitbelichteten Einzelaufnahme, und/oder einer mehrfachbelichteten Aufnahmeserie, und/oder einer langzeitbelichteten stroboskopischen Einzelaufnahme und/oder einer Videoaufnahme geeignet ist. Das elektronische Bildaufzeichnungsgerät kann insbesondere auch ein mobiles Kommunikationsendgerät mit integrierter Digitalkamera oder ein Smartphone mit integrierter Digitalkamera sein.

Vorteilhafterweise ist die optische Markierung ein passiver Messpunkt oder eine aktive Lichtquelle, insbesondere eine Leuchtdiode. Die aktive Lichtquelle oder Leuchtdiode kann mit einer Knopfzelle als Stromversorgung, einem Druckschalter oder Kippschalter zum Ein- und Ausschalten und einem Miniaturgehäuse ausgestattet sein. Die aktive Lichtquelle oder Leuchtdiode kann mit einer Magnethalterung, einem Klettverschluss, einer Verschraubung, Verklebung, Vernietung oder Punktschweißung am Gehäuse der Taumelsiebmaschine anbringbar sein.

Eine bevorzugte Ausführungsform der vorliegenden Erfindung wird anhand der Zeichnungen näher erläutert.

Es zeigt:
Fig. 1 eine schematische Ansicht der erfindungsgemäßen Vorrichtung.
Fig. 2 eine schematische Ansicht einer Bewegungskurve mit Parametern.

### Bezugszeichenliste

- 100: Vorrichtung zur Aufnahme von Bewegungsmustern
- 200: Bewegungskurve
- 210: Bewegungsmuster
- 300: Digitalkamera
- 310: Smartphone
- 400: Bewegtes Gehäuse
- 410: Taumelsiebmaschine
- 500: Messpunkt
- 510: Aktive Lichtquelle
- 600: Transparentes Referenzmittel
- 610: Gitternetz
- 700: Normierte Bewegungskurve
- 701: Radiale Dicke
- 702: Exzentrizität
- 703: Tangentiale Neigung
- 710: Horizontale

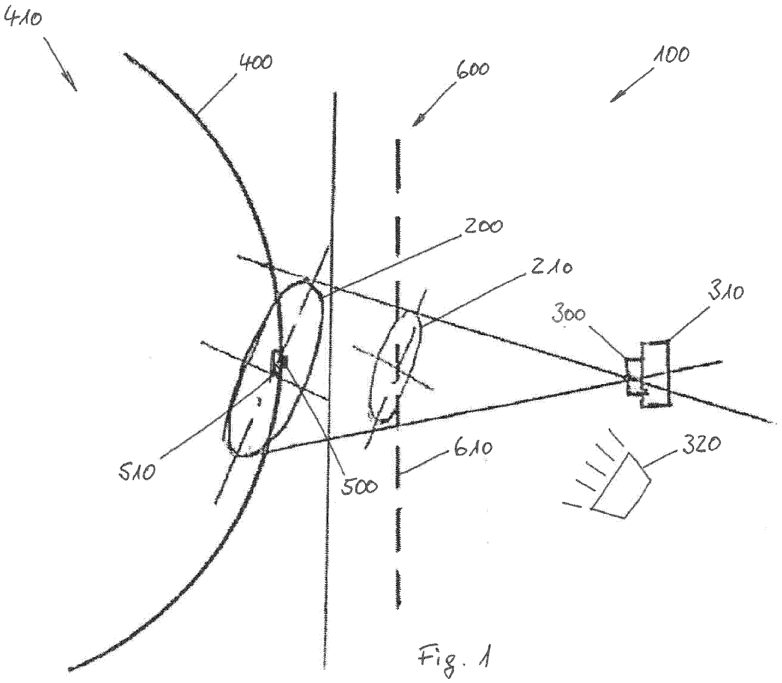

Figur 1 zeigt eine schematische Ansicht der erfindungsgemäßen Vorrichtung 100 zur Aufnahme von Bewegungsmustern einer Taumelsiebmaschine.

Die Aufnahme einer Bewegungskurve 200 wird durch eine Digitalkamera 300 vorgenommen, welche in ein Smartphone 310 integriert sein kann. Die Digitalkamera 300 ist insbesondere für die Aufnahme bewegter Objekte, d.h. für Langzeitaufnahmen, Serienaufnahmen und Videoaufnahmen eingerichtet. Die Digitalkamera kann durch eine Lichtquelle 320, insbesondere durch eine stroboskopische Lichtquelle für die Aufnahme von Bewegungsvorgängen mittels Langzeitaufnahmen oder Serienaufnahmen unterstützt werden.

Auf einem bewegten Gehäuse 400 einer schwingenden Taumelsiebmaschine 410 wird ein Messpunkt 500 mit einem Durchmesser von z.B. 2 bis 6 mm aufgebracht, z.B. aufgeklebt oder auflackiert. Der Messpunkt 500 sollte vorzugsweise aus einem weißen oder gegenüber dem Gehäuse 400 kontrastreichen Material (z.B. Papier oder Klebefolie) bestehen oder in einer Leuchtfarbe oder Signalfarbe ausgeführt werden.

Alternativ kann anstelle des passiven Messpunktes 500 eine aktive Lichtquelle kleinen Durchmessers, z.B. eine miniaturisierte Leuchtdiode 510 mit hoher Leuchtkraft auf dem Gehäuse 400 angeordnet werden, die beispielsweise in einem Miniaturgehäuse zusammen mit einer Kopfzelle und einem Schalter untergebracht wird, wobei die Knopfzelle als Stromversorgung für die Leuchtdiode 510 dient. Das Miniaturgehäuse kann mit einem Druckschalter zum Ein- und Ausschalten der Leuchtdiode 510 versehen werden. Das Miniaturgehäuse kann mit einer Magnethalterung, einem Klettverschluss, einer Verschraubung oder einer anderen Methode am Gehäuse 400 der Taumelsiebmaschine 410 befestigt werden.

Der Messpunkt 500 wird bevorzugt an der Seite der Taumelsiebmaschine 410 angebracht, vorzugsweise in einem Bereich, in dem die Bewegung der Taumelsiebmaschine ermittelt werden soll. Bei herkömmlichen Taumelsiebmaschinen kann der Messpunkt z.B. seitlich am bewegten Grundzylinder angebracht werden.

Mittels der Digitalkamera 300 bzw. mittels des Smartphones 310 wird während des Betriebes der Taumelsiebmaschine 410 eine langzeitbelichtete Aufnahme, eine Aufnahmenserie oder eine Videoaufnahme aufgenommen, gegebenenfalls mit Unterstützung der insbesondere stroboskopischen Lichtquelle 320, so dass die periodische Bewegung des Messpunktes 500 das Aufnahmeformat optimal ausfüllt, ohne dass Teile der Bewegungskurve abgeschnitten werden. Dabei wird ein ausreichend großer Abstand der Kamera von der Taumelsiebmaschine gewählt, z.B. 300 mm bis ca. 1 m, damit die dreidimensionale Bewegung der Taumelsiebmaschine im Raum zu keiner wesentlichen perspektivischen Verzerrung der Aufnahme durch eine wechselnde Entfernung des Messpunktes 500 vom Objektiv der Digitalkamera 300 führt.

Durch die Dauer der Aufnahme von z.B. 1 bis 10 Sekunden und die Wahl geeigneter Belichtungsparameter wird ein kontrastreiches Bewegungsmuster 210 der periodischen Bewegung des Messpunktes 500 aufgezeichnet.

Während der Aufnahmedauer wird die Digitalkamera 300 bzw. das Smartphone 310 vorteilhafterweise auf einer statischen Unterstützung positioniert, so dass es zu möglichst geringen Bewegungsunschärfen z.B. durch "Verwacklungen" oder Vibrationen kommt.

Um aus der durchgeführten Aufnahme auf die reale Größe des aufgezeichneten Bewegungsmusters 210 zu schließen, sind verschiedene Methoden anwendbar. So kann einerseits z.B. ein transparentes Referenzmittel 600 mit einem maßgenauen Gitternetz 610 in einem definierten Abstand zwischen Kamera 300 und Taumelsiebmaschine 410 angeordnet werden. Während der Aufnahme des sich bewegenden Messpunktes 500 wird dadurch auch das Gitternetz 610 auf der Aufnahme bzw. Aufnahmenserie oder auf dem Video abgebildet. Aus der Relation der aufgezeichneten Bewegung des sich bewegenden Messpunktes 500 und den bekannten Maßen des Gitternetzes 610 kann die Ausdehnung der aufgenommenen Bewegungskurve bestimmt werden. Die Methode hat allerdings den Nachteil, dass die Abstände zwischen der Taumelsiebmaschine 410 und dem Gitternetz 610 sowie zwischen dem Gitternetz 610 und der Kamera 300 herangezogen werden müssen, um die aufgenommene Größe des Bewegungsmusters 210 in die tatsächlichen Abmessungen der Bewegungskurve 200 umzurechnen.

Eine Bestimmung der tatsächlichen Abmessungen der aufgenommenen Bewegungskurve 200 kann wie folgt realisiert werden:
Der beschriebene Messpunkt 500 aus z.B. heller oder leuchtender Klebefolie wird mit einem exakt bekannten Maß (Durchmesser) angefertigt (z.B. 10mm oder 15 mm). Ebenso kann das Miniaturgehäuse zur Aufnahme der Leuchtdiode 510 anstelle des Messpunktes 500 mit einem exakt bekannten Durchmesser ausgeführt werden. Vorzugsweise soll das Miniaturgehäuse eine helle Farbe aufweisen, wobei die zentral angeordnete Leuchtdiode 510 selbst zur Erhöhung des Kontrastes z.B. dunkel bzw. andersfarbig umrandet sein kann.

Auf der langzeitbelichteten Aufnahme, der Aufnahmenserie oder der Videoaufnahme erscheint der Messpunkt 500 dann in Form einer breiten Spur mit der definierten Breite des Durchmessers des Messpunktes 500. Mit der Breite der Spur des Messpunktes 500 auf dem Foto oder Video liegt ein Referenzmaß vor, aus dem die Maße der Bewegungskurve über eine Verhältnisrechnung ermittelt werden können. Die Leuchtdiode 510 geringen Durchmessers beschreibt auf der Aufnahme eine dünne Linie, die der Bewegungskurve 200 der schwingenden Taumelsiebmaschine 410 entspricht.

Die Bestimmung des Winkels der Lage der Bewegungskurve kann entweder erfolgen, indem das oben beschrieben Gitternetz 610 exakt horizontal ausgerichtet wird, sodass die Lage der Kurve zur Horizontalen aus der Aufnahme ersichtlich wird.

Smartphones bieten jedoch nach dem Stand der Technik auch die Möglichkeit der geräteinternen Ermittlung der horizontalen Lage des Smartphones bzw. der Kamera ("Wasserwaagen-Funktion"). Vorteilhaft wird diese Funktion des Smartphones genutzt, um in einer Kombination der Aufnahmefunktion und der Wasserwaagen-Funktion die Ausrichtung der Kamera 300 bzw. des Smartphones 310 zur Horizontalen während der Aufnahme festzuhalten (Horizontalwert der Aufnahme), z.B. indem in die Aufnahme eine oder mehrere horizontale Linie eingeblendet werden oder indem der Wert der Winkelabweichung der Kamera zur Horizontalen während der Aufnahme als Datenwert zur durchgeführten Aufnahme abgespeichert wird.

Vorteilhaft ist es weiterhin, wenn die nach oben beschriebener Methode erzeugte Aufnahme oder Aufnahmenserie eines Bewegungsmusters 210 mittels einer Smartphone-Anwendung, einer sogenannten "App" ausgeführt wird, und wenn insbesondere die Aufnahme oder Aufnahmenserie mit der gleichzeitigen Ermittlung der Lage der Kamera zur Horizontalen während der Aufnahme kombiniert wird.

Die so erstellte Aufnahme oder Aufnahmenserie der Bewegungskurve 200 kann dann entweder intern, d.h. innerhalb des Smartphones 310 durch die App selbst, oder extern, d.h. nach Übertragung der Daten an eine Rechenzentrale, beispielsweise bei dem Hersteller der Maschine mittels geeigneter grafischer und mathematischer Methoden automatisiert ausgewertet werden. Hierfür können Methoden der Bild- oder Mustererkennung verwendet werden. Bei dieser Bild- oder Mustererkennung und Auswertung werden die Bewegungsmuster 210 zunächst in Bewegungskurven 200, und anschließend in normierte Bewegungskurven 700 umgesetzt, aus denen die gesuchten Stellparameter der Maschine, beispielsweise radiale Dicke 701, Exzentrizität 702 und tangentiale Neigung 703 zu der Horizontalen 710 berechnet werden. In Abhängigkeit von der Art und dem Typ der Maschine können weitere Parameter hinzutreten.

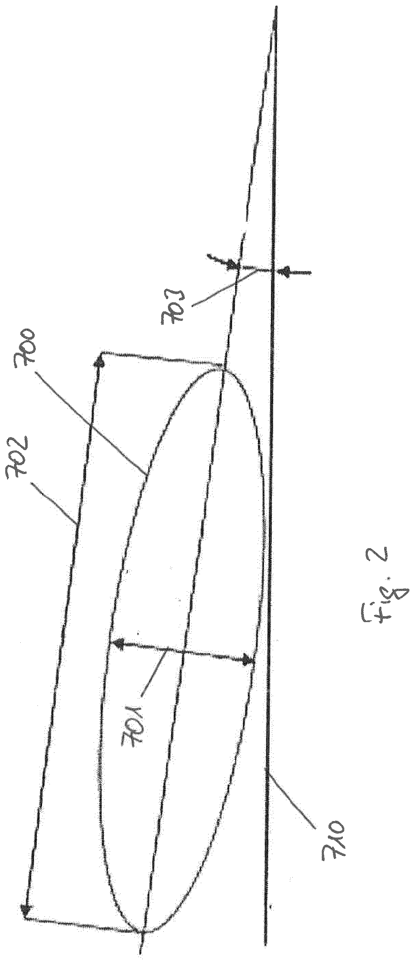

Eine normierte Bewegungskurve 700 und die beispielhaft genannten Parameter sind in Figur 2 schematisch dargestellt.

Anschließend können die auf einem Computer des Maschinenherstellers oder eines Maschineninstandhalters ermittelten Stellparameter nach deren Ermittlung unmittelbar an das Smartphone des Betreibers zurück übertragen werden, sodass der Betreiber die ermittelten Daten für eine Beurteilung des Maschinenlaufs oder für eine Justierung oder Neueinstellung der Maschine unmittelbar verwenden kann. Zu diesem Zweck werden die ermittelten Stellparameter auf der Anzeigeeinheit des Smartphones oder auf einer anderen Anzeigeeinheit graphisch oder numerisch dargestellt. Alternativ kann der Maschinenhersteller oder Maschineninstandhalter eine automatisierte Fernwartung vornehmen, d.h. die ermittelten Stellparameter automatisch und ohne Zutun des Betreibers auf die Maschine übertragen.

## Patentansprüche

1. Verfahren zur Aufnahme von Bewegungsmustern (210) einer Taumelsiebmaschine (410), **dadurch gekennzeichnet, dass** das Verfahren folgende Verfahrensschritte umfasst:
a. Anbringen einer optischen Markierung (500, 510) an der Taumelsiebmaschine (410);
b. Aufnahme der optischen Markierung (500, 510) während des Betriebs der Taumelsiebmaschine (410) und Erstellen von Bilddaten für eine Bewegungskurve (200);
c. Auswertung der aufgenommenen Bilddaten.

2. Verfahren nach Anspruch 1, **dadurch gekennzeichnet, dass** die optische Markierung (500, 510) in einem Bereich angebracht wird, in dem die Bewegung der Taumelsiebmaschine (410) ermittelt werden soll.

3. Verfahren nach Anspruch 1 oder 2, **dadurch gekennzeichnet, dass** die optische Markierung ein passiver Messpunkt (500) ist, welcher auf das Gehäuse (400) der Taumelsiebmaschine (410) aufgebracht wird.

4. Verfahren nach Anspruch 1 oder 2, **dadurch gekennzeichnet, dass** die optische Markierung eine aktive Lichtquelle (510) ist, welche auf dem Gehäuse (400) der Taumelsiebmaschine (410) angeordnet wird, insbesondere eine Leuchtdiode, welche mit einer Knopfzelle zur Stromversorgung, einem Druckschalter oder Kippschalter zum Ein- und Ausschalten und einem Miniaturgehäuse ausgestattet ist.

5. Verfahren nach einem der voranstehenden Ansprüche, **dadurch gekennzeichnet, dass** die Aufnahme der optischen Markierung (500, 510) während des Betriebs der Taumelsiebmaschine (410) mit einem elektronischen Bildaufzeichnungsgerät, insbesondere mit einer Digitalkamera (300) oder einem Smartphone (310) mit integrierter Digitalkamera erfolgt.

6. Verfahren nach Anspruch 5, **dadurch gekennzeichnet, dass** die Aufnahme der optischen Markierung (500, 510) während des Betriebs der Taumelsiebmaschine (410) wenigstens über einen Zeitraum einer Schwingungsperiode der Taumelsiebmaschine und insbesondere mittels einer langzeitbelichteten Einzelaufnahme, einer mehrfachbelichteten Aufnahmeserie, einer langzeitbelichteten stroboskopischen Einzelaufnahme oder einer Videoaufnahme erfolgt.

7. Verfahren nach einem der voranstehenden Ansprüche, **dadurch gekennzeichnet, dass** Abmessungen und Orientierung der aufgenommenen Bewegungsmuster (210) durch Vergleich mit einem Referenzmittel (600), insbesondere mit einem optischen Referenzgitter (610) oder mit einer Wasserwaage, oder durch Vergleich mit bekannten Abmessungen der optischen Markierung (500, 510) bestimmt werden.

8. Verfahren nach einem der voranstehenden Ansprüche, **dadurch gekennzeichnet, dass** die aufgenommenen Bewegungsmuster (210) durch eine interne oder externe Recheneinheit ausgewertet werden und/oder mittels einer Datenübertragungseinheit an eine Diagnoseeinrichtung zur Auswertung übertragen werden.

9. Verfahren nach Anspruch 8, **dadurch gekennzeichnet, dass** aus den Diagnosedaten optimale Stellparameter der Taumelsiebmaschine (410) errechnet und an eine Anzeigeeinheit, bevorzugt an eine Anzeigeeinheit des Smartphones (310) übertragen und numerisch oder graphisch dargestellt werden oder mittels einer Steuervorrichtung unmittelbar zur Steuerung der Taumelsiebmaschine (410) eingesetzt werden.

10. Vorrichtung zur Durchführung des Verfahrens nach einem der Ansprüche 1 bis 9, aufweisend eine Taumelsiebmaschine (410), mit einer optischen Markierung (500, 510) in einem Bereich, in dem die Bewegung der Taumelsiebmaschine (410) ermittelt werden soll, weiter aufweisend eine Digitalkamera (300) oder ein Smartphone (310) mit integrierter Digitalkamera, mit welcher bzw. welchem Bewegungsmuster (210) der Taumelsiebmaschine (410) unter Berücksichtigung der optischen Markierung (500, 510) aufnehmbar sind, und eine Auswertungsvorrichtung, aufweisend eine Recheneinheit, mit welcher aus den aufgenommenen Bewegungsmustern (210) Bilddaten für eine Bewegungskurve (200) erstellbar und auswertbar sind.

11. Vorrichtung nach Anspruch 10,
wobei mit der Recheneinheit der Auswertungsvorrichtung Diagnosedaten und/oder Stellparameter der Taumelsiebmaschine (410) berechenbar sind, und
wobei die Vorrichtung weiter
eine Datenübertragungseinheit, mit welcher Bewegungsmuster (210) und/oder Bilddaten an eine interne oder externe Recheneinheit übertragbar sind und Diagnosedaten und/oder Stellparameter von der internen oder externen Recheneinheit an den Ort der Taumelsiebmaschine (410) zurück übertragbar sind und
eine Anzeigeeinheit, insbesondere eine Anzeigeeinheit eines Smartphones (310), mit welcher die zurück übertragenen Daten darstellbar sind, aufweist.

12. Vorrichtung nach Anspruch 10 oder 11, weiter aufweisend ein Referenzmittel (600), insbesondere ein optisches Referenzgitter (610) und/oder eine Wasserwaage, **dadurch gekennzeichnet, dass** Abmessungen und Orientierung der aufgenommenen Bewegungsmuster (210) durch Vergleich mit dem Referenzmittel (600) bestimmbar sind.

13. Vorrichtung nach einem der Ansprüche 10-12, **dadurch gekennzeichnet, dass** die optische Markierung ein passiver Messpunkt (500) oder eine aktive Lichtquelle (510), insbesondere eine Leuchtdiode ist, welche insbesondere mit einer Knopfzelle zur Stromversorgung, einem Druckschalter oder Kippschalter zum Ein- und Ausschalten und einem Miniaturgehäuse ausgestattet ist, und insbesondere mit einer Magnethalterung, einem Klettverschluss, einer Verschraubung, Verklebung, Vernietung oder Punktschweißung am Gehäuse (400) der Taumelsiebmaschine (410) anbringbar ist.

14. Computerprogramm, umfassend Befehle, die bewirken, dass die Vorrichtung nach einem der Ansprüche 10 bis 13 die Verfahrensschritte nach einem der Ansprüche 1 bis 9 ausführt.

15. Recheneinheit mit einem Computerprogramm nach Anspruch 14.

## Claims

1. A method for recording motion patterns (210) of a tumbler screening machine (410), **characterized in that** the method comprises the following method steps:
a. applying an optical marking (500, 510) at the tumbler screening machine (410);
b. recording the optical marking (500, 510) during operation of the tumbler screening machine (410) and establishing image data for a motion curve (200);
c. evaluating the recorded image data.

2. The method according to claim 1, **characterized in that** the optical marking (500, 510) is applied in a region in which the motion of the tumbler screening machine (410) is to be determined.

3. The method according to claims 1 or 2, **characterized in that** the optical marking is a passive reading point (500) which is applied to the housing (400) of the tumbler screening machine (410).

4. The method according to claims 1 or 2, **characterized in that** the optical marking is an active light source (510) which is arranged on the housing (400) of the tumbler screening machine (410), in particular a light emitting diode, which is provided with a button cell for power supply, a pressure switch or toggle switch for switching on and off, and a miniature housing.

5. The method according to any of the preceding claims, **characterized in that** the recording of the optical marking (500, 510) during operation of the tumbier screening machine (410) is performed with an electronic image recording device, in particular with a digital camera (300) or a smartphone (310) with an integrated digital camera.

6. The method according to claim 5, **characterized in that** the recording of the optical marking (500, 510) during operation of the tumbler screening machine (410) is performed at least over a period of one oscillation period of the tumbler screening machine and in particular by means of a time-exposed single recording, a multiple-exposed recording series, a time-exposed stroboscopic single recording, or a video recording.

7. The method according to any of the preceding claims, **characterized in that** the measurements and the orientation of the recorded motion patterns (210) are determined by comparison with a reference means (600), in particular with an optical reference grid (610) or with a water level, or by comparison with known measurements of the optical marking (500, 510).

8. The method according to any of the preceding claims, **characterized in that** the recorded motion patterns (210) are evaluated by an internal or external computing unit and/or transmitted by means of a data transmission unit to a diagnosis device for evaluation.

9. The method according to claim 8, **characterized in that** optimum adjusting parameters of the tumbler screening machine (410) are calculated from the diagnosis data and are transmitted to a display unit, preferably a display unit of the smartphone (310), and are represented numerically or graphically or are, by means of a control device, used directly for controlling the tumbler screening machine (410).

10. A device for performing the method according to any of claims 1 to 9, comprising a tumbler screening machine (410) with an optical marking (500, 510) in a region in which the motion of the tumbler screening machine (410) is to be determined, further comprising a digital camera (300) or a smartphone (310) with an integrated digital camera by means of which motion patterns (210) of the tumbler screening machine (410) can be recorded in due consideration of the optical marking (500, 510), and an evaluation device comprising a computing unit by means of which image data for a motion curve (200) can be established and evaluated from the recorded motion patterns (210).

11. The device according to claim 10, wherein, with the computing unit of the evaluation device, diagnosis data and/or adjusting parameters of the tumbler screening machine (410) can be calculated, and wherein the device further comprises a data transmission unit by means of which motion patterns (210) and/or image data can be transmitted to an internal or external computing unit and diagnosis data and/or adjusting parameters can be retransmitted from the internal or external computing unit to the place of the tumbler screening machine (410), and a display unit, in particular a display unit of a smartphone (310), by means of which the retransmitted data can be represented.

12. The device according to claim 10 or 11, further comprising reference means (600), in particular an optical reference grid (610) and/or a water level, **characterized in that** measurements and orientation of the recorded motion patterns (210) can be determined by comparison with the reference means (600).

13. The device according to any of claims 10- 12, **characterized in that** the optical marking is a passive reading point (500) or an active light source (510), in particular a light emitting diode, which is provided in particular with a button cell for power supply, a pressure switch or toggle switch for switching on and off, and a miniature housing, and is adapted to be attached to the housing (400) of the tumbler screening machine (410) in particular with a magnet holder, a hook and loop fastener, a screw connection, bonding, riveting or spot welding.

14. A computer program comprising instructions causing the device according to any of claims 10 to 13 to perform the method steps according to any of claims 1 to 9.

15. A computing unit with a computer program according to claim 14.

## Revendications

1. Procédé d'enregistrement de modèles de mouvement (210) d'un tamiseur à nutation (410), **caractérisé en ce que** le procédé comprend les étapes de procédé suivantes consistant à :
a. appliquer un repère optique (500, 510) sur le tamiseur à nutation (410) ;
b. enregistrer le repère optique (500, 510) pendant le fonctionnement du tamiseur à nutation (410) et créer des données d'image pour une courbe de mouvement (200) ;
c. évaluer les données d'image enregistrées.

2. Procédé selon la revendication 1, **caractérisé en ce que** le repère optique (500, 510) est appliqué dans une zone dans laquelle le mouvement du tamiseur à nutation (410) doit être déterminé.

3. Procédé selon la revendication 1 ou 2, **caractérisé en ce que** le repère optique est un point de mesure passif (500) qui est appliqué sur le carter (400) du tamiseur à nutation (410).

4. Procédé selon la revendication 1 ou 2, **caractérisé en ce que** le repère optique est une source de lumière active (510) qui est disposée sur le carter (400) du tamiseur à nutation (410), en particulier une diode électroluminescente qui est équipée d'une pile bouton pour l'alimentation électrique, d'un interrupteur à pression ou d'un interrupteur à bascule pour la mise en marche et l'arrêt et d'un boîtier miniature.

5. Procédé selon l'une des revendications précédentes, **caractérisé en ce que** l'enregistrement du repère optique (500, 510) est effectuée pendant le fonctionnement du tamiseur à nutation (410) à l'aide d'un appareil d'enregistrement d'images électronique, en particulier d'une caméra numérique (300) ou d'un smartphone (310) avec caméra numérique intégrée.

6. Procédé selon la revendication 5, **caractérisé en ce que** l'enregistrement du repère optique (500, 510) est effectuée pendant le fonctionnement du tamiseur à nutation (410) au moins sur une durée d'une période d'oscillation du tamiseur à nutation et en particulier au moyen d'un enregistrement individuel à exposition longue, d'une série d'enregistrements à expositions multiples, d'un enregistrement individuel stroboscopique à exposition longue ou d'un enregistrement vidéo.

7. Procédé selon l'une des revendications précédentes, **caractérisé en ce que** les dimensions et l'orientation des modèles de mouvement enregistrés (210) sont déterminées par comparaison avec un moyen de référence (600), en particulier avec une grille de référence optique (610) ou avec un niveau à bulle, ou par comparaison avec des dimensions connues du repère optique (500, 510).

8. Procédé selon l'une des revendications précédentes, **caractérisé en ce que** les modèles de mouvement enregistrés (210) sont évalués par une unité de calcul interne ou externe et/ou sont transmis à un équipement de diagnostic pour évaluation au moyen d'une unité de transmission de données.

9. Procédé selon la revendication 8, **caractérisé en ce que** des paramètres de réglage optimaux du tamiseur à nutation (410) sont calculés à partir des données de diagnostic et transmis à une unité d'affichage, de préférence à une unité d'affichage du smartphone (310), et sont représentés numériquement ou graphiquement ou sont utilisés directement pour commander le tamiseur à nutation (410) au moyen d'un dispositif de commande.

10. Dispositif pour la mise en œuvre du procédé selon l'une des revendications 1 à 9, comprenant un tamiseur à nutation (410), avec un repère optique (500, 510) dans une zone dans laquelle le mouvement du tamiseur à nutation (410) doit être déterminé, comprenant en outre une caméra numérique (300) ou un smartphone (310) avec caméra numérique intégrée, avec laquelle ou lequel des modèles de mouvement (210) du tamiseur à nutation (410) peuvent être enregistrés en tenant compte du repère optique (500, 510), et un dispositif d'évaluation comprenant une unité de calcul avec laquelle des données d'image pour une courbe de mouvement (200) peuvent être créées et évaluées à partir des modèles de mouvement enregistrés (210).

11. Dispositif selon la revendication 10,
dans lequel l'unité de calcul du dispositif d'évaluation permet de calculer des données de diagnostic et/ou des paramètres de réglage du tamiseur à nutation (410), et
dans lequel le dispositif comprend en outre
une unité de transmission de données avec laquelle des modèles de mouvement (210) et/ou des données d'image peuvent être transmis à une unité de calcul interne ou externe et des données de diagnostic et/ou des paramètres de réglage peuvent être transmis en retour de l'unité de calcul interne ou externe à l'emplacement du tamiseur à nutation (410) et
une unité d'affichage, en particulier une unité d'affichage d'un smartphone (310), avec laquelle les données transmises en retour peuvent être représentées.

12. Dispositif selon la revendication 10 ou 11, comprenant en outre un moyen de référence (600), en particulier une grille de référence optique (610) et/ou un niveau à bulle, **caractérisé en ce que** les dimensions et l'orientation des modèles de mouvement enregistrés (210) peuvent être déterminées par comparaison avec le moyen de référence (600).

13. Dispositif selon l'une des revendications 10 à 12, **caractérisé en ce que** le repère optique est un point de mesure passif (500) ou une source de lumière active (510), en particulier une diode électroluminescente, qui est en particulier équipée d'une pile bouton pour l'alimentation électrique, d'un interrupteur à pression ou d'un interrupteur à bascule pour la mise en marche et l'arrêt et d'un boîtier miniature, et qui peut en particulier être fixé(e) au carter (400) du tamiseur à nutation (410) par un support magnétique, une fermeture autoagrippante, un vissage, un collage, un rivetage ou une soudure par points.

14. Programme d'ordinateur comprenant des instructions qui amènent le dispositif selon l'une des revendications 10 à 13 à mettre en œuvre les étapes de procédé selon l'une des revendications 1 à 9.

15. Unité de calcul dotée d'un programme d'ordinateur selon la revendication 14.
